# EUROPEAN PATENT APPLICATION

(11) **EP 3 858 562 A1**
(43) Date of publication of application: **04.08.2021**
(21) Application number: 20154316.2
(22) Date of filing: 29.01.2020
(51) Int. Cl.: B26B 15/00

(54) **CUTTING TOOL**

(71) Applicant: HUSQVARNA AB, 561 82 Huskvarna (SE)
(72) Inventor: Rudolf, Peter, 89250 Senden (DE)
(74) Representative: Finkele, Rolf

(57) **Abstract**

A cutting tool (**100**) includes a first blade (**102**) and a second blade (**104**). The second blade (**104**) is pivotally coupled at a pivot point to the first blade (**102**). The first blade (**102**) and the second blade (**104**) together perform a cutting action on an object placed between them. The cutting tool (**100**) further includes a first handle (**108**) and a second handle (**110**). The first handle (**108**) is operatively coupled to the first blade (**102**). The second handle (**110**) is operatively coupled to the second blade (**104**). The first handle (**108**) is pivotally coupled to the second handle (**110**) at the pivot point through a form fit (**136**).

## Description

### TECHNICAL FIELD

The present disclosure relates to a cutting tool. More specifically, the present disclosure relates to the cutting tool which allows safe and user-friendling handling and disassembly of blades of the cutting tool.

### BACKGROUND

Cutting tools such as secateurs, loppers, rakes, pliers are used for performing cutting action using one or more blades. Put simply, such tools provide increased mechanical assistance and ease of operation to a common user to conveniently perform operations such as with branches of varying dimensions. Further, the cutting tools provide benefits such as trapping bypass cutting or simply "bypass" allows pruning/cutting by the cutting tools while holding an object (i.e. branch) with one of the cutting edges.

However, there may be many instances where working with the cutting tool becomes inconvenient and unsafe for a user to handle. For instance, on unbolting a removeable nut provided at a pivoted point of one or more blades and one or more handles of the cutting tools, there are chances of the one or more handles to inadvertently disassemble during blade(s) replacement. This segregation of the one or more handles may deform structure of the cutting tool or pose hindrances or even damage to some accessories (say wires) assembled within the one or more handles.

An example of a cutting tool is provided in US patent application 10, 076, 827 (hereinafter referred to as '827 reference). The '827 reference provides a cutting tool. The cutting tool is constructed with an upper tool handle assembly and a lower tool handle assembly which are configured to be snap-fit together to enable pivotal movement between the upper tool handle assembly and the lower tool handle assembly. Further, a biasing member is secured between the upper tool handle assembly and the lower tool handle assembly in order to bias the upper tool handle assembly and the lower tool handle assembly to an open default position and in order to bias a pair of cutting blades into an object receiving open position. However, the '827 reference falls short of providing an easy to handle, compact, and user-friendly cutting tool to the common user.

Thus, there is a need of an improved cutting tool which allows ease of disassembly of blades without inadvertently disturbing handles or other parts of the cutting tool.

### SUMMARY

In view of the above, it is an objective of the present invention to solve or at least reduce the drawbacks discussed above. The objective is at least partially achieved by a cutting tool. The cutting tool includes a first blade and a second blade. The second blade is pivotally coupled to the first blade at a pivot point. The first blade and the second blade together perform a cutting action on an object placed between them. The cutting tool further includes a first handle and a second handle. The first handle is operatively coupled to the first blade. The second handle is operatively coupled to the second blade. The cutting tool is characterized in that the first handle is pivotally coupled to the second handle at the pivot point, while the first handle and the second handle are pivotally coupled together through a form fit. Thus, the present disclosure provides a simple, convenient, and user-friendly cutting tool which allows ease of blade(s) replacement without hampering or distorting handle(s) or other parts, in particular the wire electrically connecting electrical components located within the different handles, of the cutting tool inadvertently.

According to an embodiment of the present invention, a fastener pivotally couples the first blade and the second blade. The fastener helps in removable and user-friendly coupling of the first blade and the second blade.

According to an embodiment of the present invention, the form fit is realized via a snap fit connection. The form fit allows to avoid inadvertent disassociation of the first handle and the second handle, even after the removal of the fastener.

According to an embodiment of the present invention, the form fit is a removable connection. The form fit helps in isolation of the first handle and the second handle as per requirements.

According to an embodiment of the present invention electrical components associated with the first handle **108** and within the second handle **110** are electrically connected via a wire **134.** This allows to easily associate various different electrical components of the cutting tool with different ones of the two handles. In a preferred embodiments at least some of the associated components are incorporated inside of at least one of the handles, which allows to enhance their protection as well as to optimize the ergonomics of the handles.

According to an embodiment of the present invention, the wire is a sensor wire. The sensor wire detects the force applied by the user which is further sent to a drive unit (or processor) to take the applied force into account for providing mechanical advantage, if required.

According to an embodiment of the present invention, the sensor wire is present substantially within the first handle. Some part of the sensor wire is also running through the second handle. This makes the arrangement of the cutting tool more compact, ergonomic and helps in uniform distribution of the wire.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a cutting tool, in accordance with an aspect of the present disclosure;
**FIG. 2** shows a perspective view of a drive unit within the cutting tool, in accordance with an aspect of the present disclosure;
**FIG. 3** shows a perspective view of the cutting tool, in accordance with another aspect of the present disclosure
**FIG. 4** shows a perspective view of an adapter of the cutting tool, in accordance with an aspect of the present disclosure;
**FIG. 5** shows a perspective view of the cutting tool showing disassembly of a fastener, in accordance with another aspect of the present disclosure; and
**FIG. 6** shows a perspective view of a form fit connection of a first handle and a second handle of the cutting tool, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

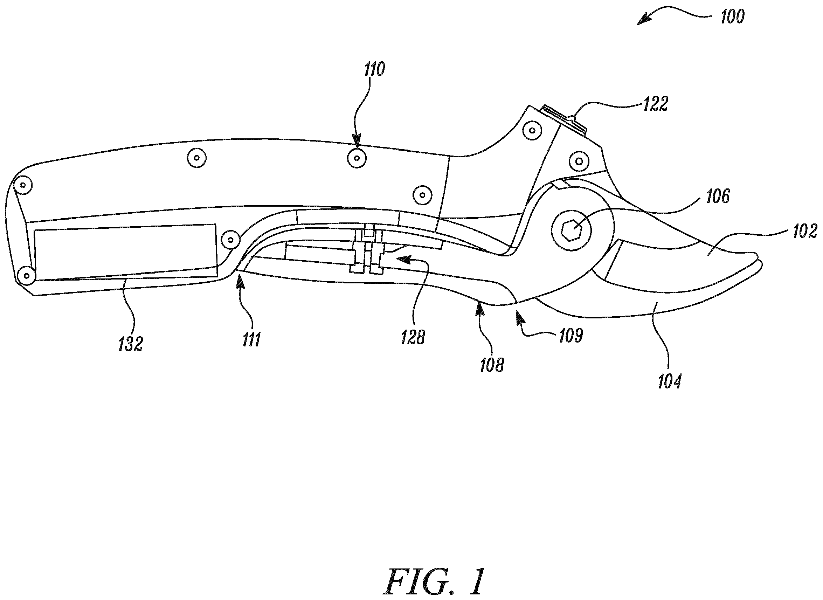

**FIG. 1** illustrates a cutting tool **100.** The cutting tool **100** of the present disclosure is illustrated as secateurs, however, the present disclosure may be readily applied to any cutting tool **100** such as, but not limited to, a lopper, shears, scissors etc. with two or more cutting edges. The cutting tool **100** includes one or more blades i.e. a first blade **102** and a second blade **104.** The first blade **102** is a replaceable blade. Further, the second blade **104** is pivotally coupled to the first blade **102.** The first blade **102** and the second blade **104** together perform a cutting action on an object (generally a branch) placed between them. In one embodiment the cutting tool **100** further includes a lid **132.** This allows for an easy replacement of the battery. Preferably the cutting tool is using a replaceable battery or even uses different ones out of a set of replaceable batteries.

As illustrated in **FIG. 1**, the cutting tool **100** includes one or more handles i.e. a first handle **108** and a second handle **110.** The first handle **108** is operatively coupled with the first blade **102.** Further, the first handle **108** defines a top portion **109** and a back portion **111.** The second handle **110** is operatively coupled with the second blade **104.** In closed position of the cutting tool **100,** at least a part of the second handle **110** at least partially encloses the back portion **111** of the first handle **108.** Although, the present embodiment illustrates the first handle **108** almost fully enclosed within the second handle **110,** the second handle **110** may also be at least partially enclosed within the second handle **110.**

In some embodiments, the first blade **102** and the second blade **104** may be one or more of a clip point blade, a drop point blade, a gut hook blade, a hawkbell blade, a needle point blade, a straight back blade, a sheepsfoot blade and a spear point blade.

In some embodiments, the first blade **102** and the second blade **104** may be made of aluminum or any other material as used or known in the art. Choice of the material for any of the first blade **102** and the second blade **104** will generally depend upon factors such as life, application, weight or other parameters related to the cutting tool **100.** However, the present disclosure is not to be limited by the type of material of the first blade **102** and the second blade **104** in any manner.

During implementation, at least one of the first blade **102** and the second blade **104** may be a fixed blade while the other performs desired cutting action. Alternately or additionally, both the first blade **102** and the second blade **104** may be movable during the cutting action.

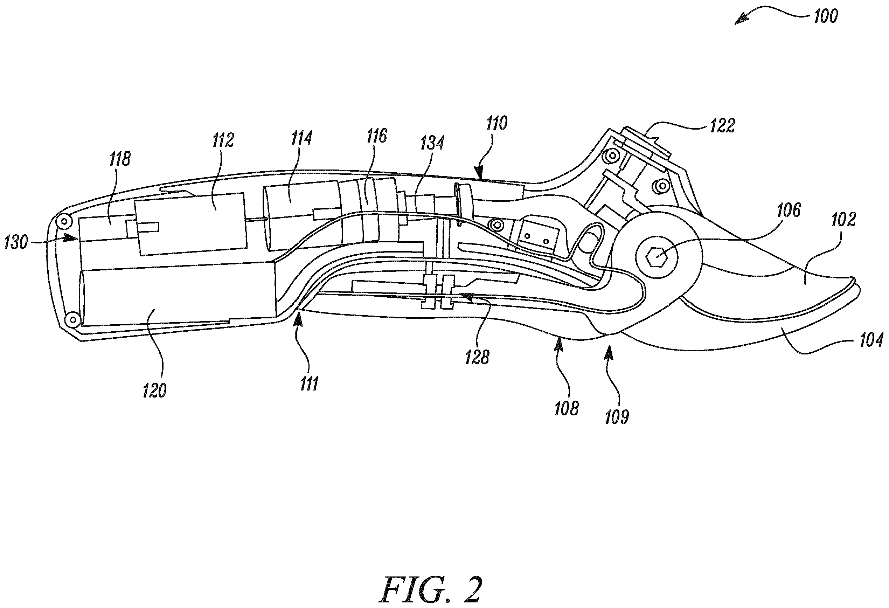

**FIG. 2** illustrates the cutting tool **100** which includes a drive unit **130.** The drive unit **130** includes a motor **112** and a gearbox **114.** The drive unit **130** further includes a drum **116** comprising a clutch, a retraction spring and a winch. Further, the drive unit **130** includes a printed circuit board assembly (PCBA) **118** and a battery **120.** In one embodiment the battery **120** is covered by the lid **132.** The lid **132** may be slide opened to change the battery **120.** The drive unit **130 is** operatively coupled to at least one of the first blade **102** and the second blade **104.** As illustrated in the present embodiment, the drive unit **130** is housed within the second handle **110.** The battery **120** of the drive unit **130** is also housed within the second handle **110.** This helps in reducing the dimensions and improving ergonomic profile of the first handle **108.** The drive unit **130** is configured to selectively provide a supplemental motor force to assist a movement of at least one of the first blade **102** and the second blade **104** to perform the cutting action.

As illustrated in **FIG. 2****,** a wire **134** is running between the first handle **108** and the second handle **110,** and the first handle **108** and the second handle **110.** The wire **134** is connected to the drive unit **130.** In some embodiments, the wire **134** may be a sensor wire detecting a torque between the one or more blades **102, 104** and the one or more handles **108, 110**. The wire **134** detects the force applied by the user which is further sent to a drive unit **130** (or say any processer of the cutting tool **100**) to take the applied force into account to assist with any supplemental force, as per the need. In some embodiments, the wire **134** is substantially running through the first handle **108,** or any other part/component of the cutting tool **100,** in order to make the cutting tool **100** more compact, ergonomic and the like. Some part of the wire **134** may even run through the second handle **110** which allows uniform distribution of the wire **134.**

In a preferred embodiment, all components of the drive unit **130** are housed in a single handle i.e. the second handle **110** as best illustrated in **FIG. 2****.** This helps in reducing the thickness, dimensions, ergonomic profile or spatial footprint of the second handle **110,** and the first handle **108.** This even allows the combined profile of the second handle **110,** and the first handle **108** to be realized as one part, particularly during closed state of the first handle **108.**

In some embodiments, boundary lines (not shown) of both the first handle **108** and the second handle **110** may be parallel to each other. Alternately or additionally, the boundary lines of the one or more of handles i.e. the first handle **108** and the second handle **110** may be non-aligned with respect to each other.

In some embodiments, the cutting tool **100** could also include a switch to activate or deactivate the drive unit **130.** In the depicted embodiment this switch is realized in top of the cutting tool **100** as slider or trigger **122,** alternatively it as well could be realized as a slider of trigger. On engaging, moving or pressing the slider or trigger **122** the drive unit **130** gets switched on and off and thus the cutting tool **100** becomes convenient and safe to handle by common users. The drive unit **130** may be deactivated for instances which may require to save/extend battery life or allow uninterrupted operation of the power-assisted cutting tool **100,** such as for low battery conditions. In such instances of the deactivated drive unit **130,** it could be possible that the motor **112** will remain in a disengaged/OFF state leading to a purely user-based cutting action by the cutting tool **100,** without any supplemental motor force.

In some embodiments, the slider or trigger **122** may be a button, a knob, a single pole single throw switch, a single pole double throw switch, a double pole single throw switch, a double pole double throw switch, a push-button switch, a toggle switch, a limit switch, a float switch, and the like. Alternately or additionally, a button, a knob, or any other switching means as used or known in the relevant art may be present in place of the slider or trigger **122.**

In some embodiments, the battery **120** may be a primary battery, a secondary battery. For example, the battery **120** may be one or more of a lithiumion, a nickel cadmium, a nickel-metal hydride, and a lead-acid battery.

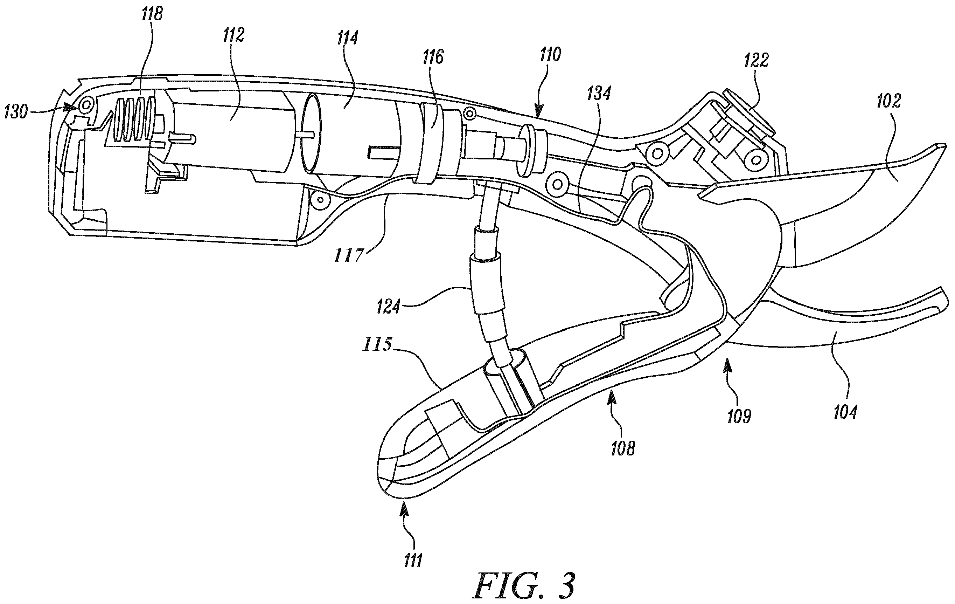

**FIG. 3** illustrates the first handle **108** and the second handle **110** which have one or more inner sides **115, 117** respectively. Advantageously, in accordance with an embodiment of the present disclosure, elastic, rounded design of the one or more inner sides **115,117** of both the first handle **108** and the second handle **110** may allow to avoid an undesirable crushing, in particular a pinching of operator's or user's hand, between the first handle **108** and the second handle **110,** and the like.

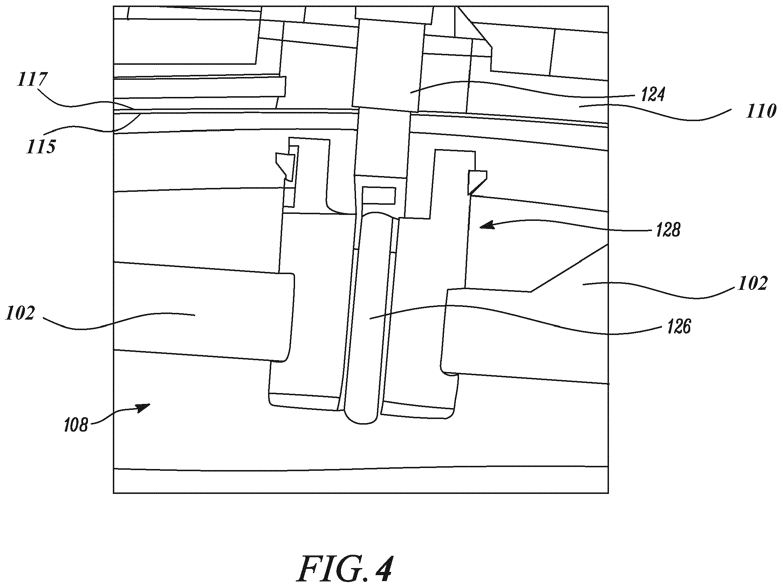

**FIG. 4** illustrates an adapter **128** of the cutting tool **100.** The cutting tool **100** further includes a rope **126** and a spring **124.** The adapter **128** finds application for pre-fixing the spring **124** and the rope **126** with the first handle **110,** without any direct engagement or contact of the spring **124** and the rope **126** with the first handle **110.** The first blade **102** is passing through the adapter **128.** The piercing of the first blade **102** through the adapter **128** helps in securing or locking of the first blade **102** within the adapter **128,** and/or the bottom handle **110** as per the requirement.

In some embodiments, a connection of the adapter **128** with the first blade **102** may be achieved by pushing, sliding, and piercing the first blade **102** through the adapter **128.** The adapter **128** may be made up of one or more of a material like plastic, rubber, glass and the like. Additionally, or alternatively, the first blade **102** may slide, pierce, pass into the adapter **128.** The adapter **128** allows the smooth movement or disassembly of the first blade **102** by simple pulling action on the first blade **102.**

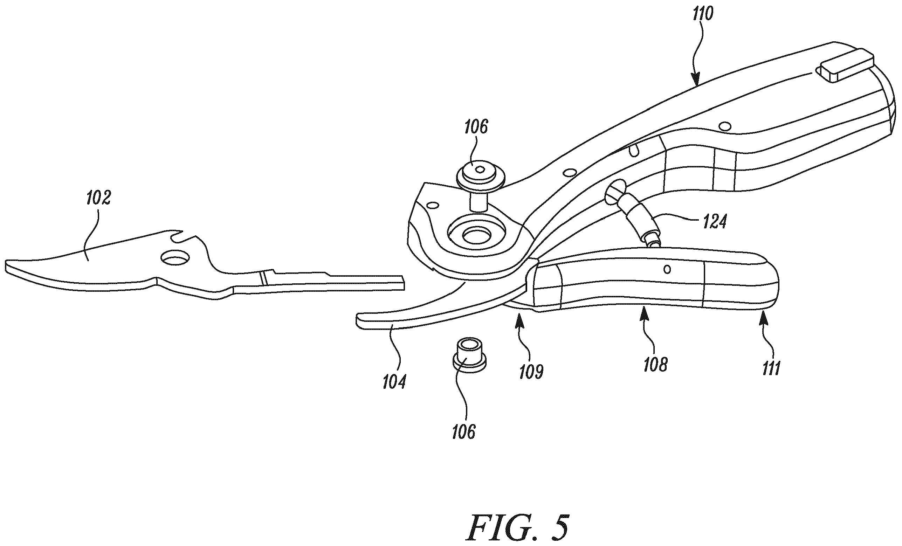

**FIG. 5** illustrates the cutting tool **100** which includes a fastener**106**. The fastener **106** is provided at the pivoted position of the first blade **102** and the second blade **104.** The fastener **106** pivotally couples the first handle **108** and the second handle **110.** In this configuration, the fastener **106** helps in associating the first handle **108** and the second handle **110** together. Moreover, the fastener **106** allows ejection of the first blade **102,** on disassembly of the fastener **106.** The first blade **102** may be substituted with a new blade (i.e. another first blade **102,** not shown) having the desired features.

In some embodiments, the fastener **106** may be any one or more of a coupling nut, a flange nut, a hex nut, a lock nut, a slotted nut, a square nut, a wheel nut and the like.

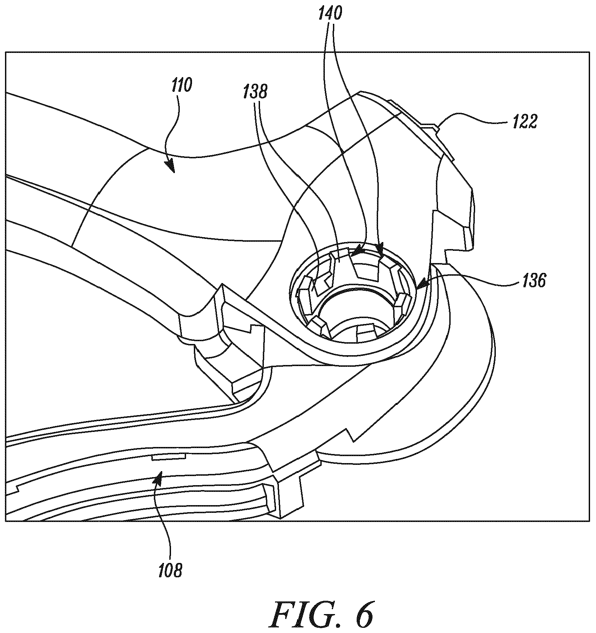

**FIG. 6** illustrates a form fit **136** provided at the point of pivot between the first handle **108** and the second handle **110.** The form fit **136** allows to avoid inadvertent disassociation of the first handle **108** and the second handle **110** even after the removal of the fastener **106.** In a preferred embodiment, the form fit **136** is a removable connection. The form fit **136** helps to isolate the first handle **108** and the second handle **110** from any stresses, damages, or inadvertent force which could have led to disassembly of the first handle **108** and the second handle **110,** in absence of the form fit **136** on disassembly of the fastener **106.**

In the present embodiment, the form fit **136** is formed by one or more tabs **138** provided with at least one of the first handle **108** and the second handle **110.** In the illustrated embodiments, the one or more tabs **138** are provided with the first handle **108.** The one or more tabs **138** couple with one or more contours **140** provided with the second handle **110.** Alternately, position of the one or more tabs **138** and the one or more contours **140** may be exchanged between the first handle **108** and the second handle **110.** This coupling of the one or more tabs **138** and the one or more contours **140** of the form fit **136** prevents inadvertent dissociation of the first handle **108** and the second handle **110,** such as during removal or disassembly of any of the first blade **102** and the second blade **104.**

During implementation, the form fit **136** with the first blade **102,** and the second blade **104** may be provided as an integral structural feature of the first blade **102** and the second blade 104. The form fit 136 may also be provided by attaching the tabs **138** through gluing, tying, screwing and the like. Alternately or additionally, the one or more blades i.e. the first blade **102** and the second blade **104,** and the form fit **136** may be coupled together by using snap-fits, push-fits, or by connections like threads and the like. Further, the form fit **136** may be removably disassociated as per the requirements. The form fit **136** helps the wire **134** to retain its stability without disturbing any functionality of the cutting tool **100.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: First blade
- **104**: Second blade
- **106**: Fastener
- **108**: First handle
- **109**: Top Portion
- **110**: Second handle
- **111**: Back Portion
- **112**: Motor
- **114**: Gear Box
- **115**: Inner Side
- **116**: Drum
- **117**: Inner Side
- **118**: Printed Circuit Board Assembly (PCBA)
- **120**: Battery
- **122**: Slider or Trigger
- **130**: Drive unit
- **132**: Lid
- **134**: wire
- **136**: Form fit
- **138**: Tabs
- **140**: Contours

## Claims

1. A cutting tool **(100)** comprising:
a first blade **(102);**
a second blade **(104)** pivotally coupled to the first blade **(102)** at a pivot point, wherein the first blade **(102)** and the second blade **(104)** together perform a cutting action on an object placed therebetween;
a first handle **(108)** operatively coupled to the first blade **(102);**
a second handle **(110)** operatively coupled to the second blade **(104),**
**characterized in that:**
the first handle **(108)** is pivotally coupled to the second handle **(110)** at the pivot point;
the first handle **(108)** and the second handle **(110)** are pivotally coupled together through a form fit **(136).**

2. The cutting tool **(100)** of claim **1,** wherein a fastener **(110)** pivotally couples the first blade **(102)** and the second blade **(104)** at the pivot point.

3. The cutting tool **(100)** of claim **1,** wherein the form fit **(136)** is realized via a snap fit connection **(136).**

4. The cutting tool **(100)** of claim **1,** wherein the form fit **(136)** is a removable connection.

5. The cutting tool **(100)** of claim 1, wherein electrical components associated with the first handle **(108)** and within the second handle **(110)** are electrically connected via a wire **(134).**

6. The cutting tool **(100)** of claim **5,** wherein at least some of the associated components are incorporated inside of at least one of the handles **(108, 110).**

7. The cutting tool **(100)** of claim **5 or 6,** wherein the wire **(134)** is a sensor wire **(134).**

8. The cutting tool **(100)** of claim **7,** wherein the sensor wire **(134)** is present substantially within the first handle **(108).**
